Europäisches Patentamt

European Patent Office

Office européen des brevets

(19)

(11) Publication number:

0 381 606
A1

## (12) EUROPEAN PATENT APPLICATION

(21) Application number: 90500007.1

(22) Date of filing: 25.01.90

(51) Int. Cl.5: A47J 37/07

(30) Priority: 26.01.89 ES 8900234 U

(43) Date of publication of application:
08.08.90 Bulletin 90/32

(84) Designated Contracting States:
AT BE CH DE FR GB GR IT LI LU NL SE

(71) Applicant: Nicolas Gutierrez, Alejandro
San Juan 78
E-24006 Leon(ES)

(72) Inventor: Nicolas Gutierrez, Alejandro
San Juan 78
E-24006 Leon(ES)

(74) Representative: Garcia Cabrerizo, Francisco
OFICINA GARCIA CABRERIZO S.L. Vitruvio 23
E-28006 Madrid(ES)

(54) Combined stove and pot for cooking out-doors.

(57) The present invention relates to a combined stove and pot to cook outdoors having two main parts, one of them made up of a cylindrical metal outer case (1) which is the actual stove, and the other made up of a receptacle (2), also metal, which is the pot. The pot is designed to hold the food to be cooked, so that the pot is placed inside the stove over the fire or heat radiated by any suitable combustion material (wood, coal, etc.) placed on a bottom tray (5) with holes which is the bottom of the stove. The pot is designed to be suspended inside the stove via the resting on the rim of the stove of a protruding horizontal plate (9) which the upper rim of the pot has. The invention allows the cooking of stews with the most varied ingredients, anywhere outdoors, without the risk of causing a fire.

Fig. 1

EP 0 381 606 A1

## COMBINED STOVE AND POT FOR COOKING OUT-DOORS

The invention is about a combined stove and pot for cooking outdoors, designed and conceived to prepare any type of dish or stew comfortably and safely.

It is commonplace for people to go either with the family or in group excursions to the countryside and mountains. These countryside excursions have one great appeal, to prepare and cook the food that we enjoy eating outdoors.

However, to cook food outdoors we need to light wood, with the risk that it could start a fire.

On the other hand, there are no known means of cooking stews, considered as main courses (stews, vegetables and their combination with fish, meat, etc.) with the required efficiency, since what we are used to at the moment are the typical grills for roasting or paellas, or gas stoves to --heat up pre-cooked food. In any case, and as it has already been said, no mechanisms are known that enable us to make all kind of stews, in large quantities, comfortably in any part of the countryside or the mountains without the risk of starting a fire.

The combined pot and stove proposed has been designed -to cook such dishes, that is to say, to make all kinds of stews for a large number of people, without the risk of --starting a fire, and besides it is quick and easy to use -anywhere in the countryside or mountains.

To be more specific, the said unit is made up of a stove, with a cylindrical outer case and a hollow metal interior, ideally made of a light material (aluminium, brass, etc.) without excluding others. Its cylindrical case has supporting legs and a bottom which acts as a coal or wood tray or for -any other combustion material, which can be put in either --through the open top, or through an opening on the lower side. On the latter there are some holes which, together with other holes on the side provide the necessary ventilation for combustion.

This stove or cylindrical case has a carrying handle, which can turn on two purpose built bearings or braces externally set on opposite sides of the outer case near the rim or upper top.

To this stove or cylindrical outer case is coupled the second key part of the unit; this consists of the cooking pot, which is designed as the receptacle for the food to be cooked, and in addition its opening has a protruding horizontal plate which rests on the rim of the cylindrical outer case or stove, positioning the pot inside the stove so that the hear of the fire set at the bottom of the stove can heat the food being cooked inside the pot directly and efficiently. The pot, on the other hand, comes with --its corresponding top, which can be chained to one of the handles of the stove, handles which are strategically placed on the protruding horizontal plate supporting the said stove.

Obviously, with this system all kind of food can be cooked without any risk of starting a fire, because the combustion material used (coal, wood, etc.) is enclosed and isolated. Apart from stews, roasts can be cooked simply by removing the pot and placing a conventional grill on the outer case of the stove.

In order to provide a better understanding of the features of the invention, there follows a detailed description in reference to a diagram attached to this specification and which acts as an integral part of it, and where the following has been represented as of a merely orientative and not limitative character:

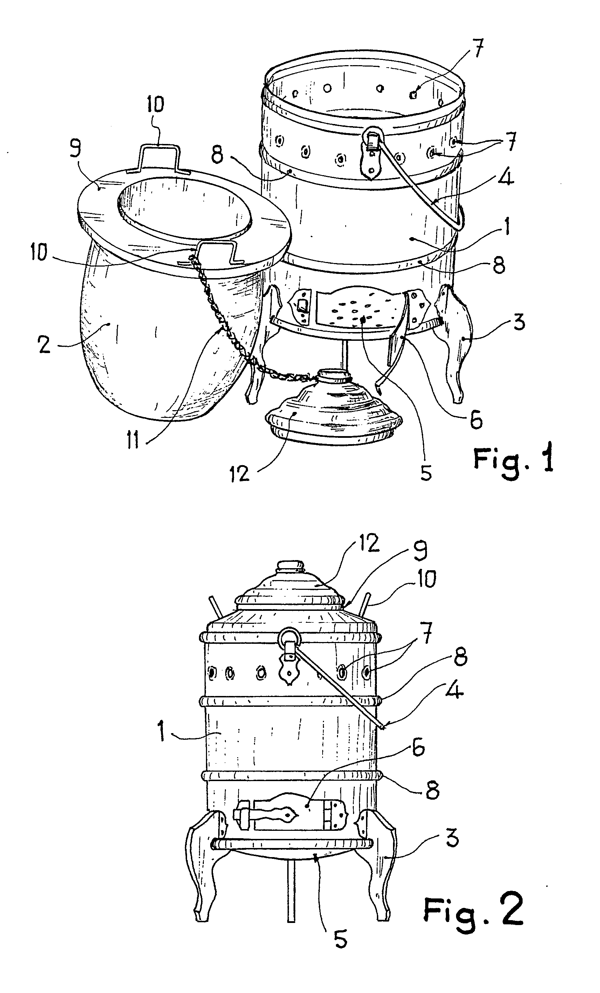

Figure 1 shows a general view of the combined stove and pot, separated in order to check clearly the structural features -of all the parts which it is composed of the best presentable way shown.

Figure 2 shows a side view of the unit ready for use, that is with the pot inside the outer case of the stove.

In these diagrams the numbers correspond to:

1.- Cylindrical outer case making up a type of stove.

2.- Pot

3.- Legs of the stove (1)

4.- Handles of the stove (1)

5.- Tray or bottom of the stove (1)

6.- Bottom side opening of the stove (1)

7.- Holes of the stove (1)

8.- Annular rings of the stove (1)

9.- Protruding horizontal plate of the pot (2)

10.- Handles of the plate (9)

11.- Chain for the top (12) of the pot (2)

12.- Top of the pot (2).

As it can be seen from the diagrams, the outdoors cooking unit which the invention suggests comprises of two basic - -parts, one forming a type of stove (1) and the other a pot (2). The whole unit is made of metal, of a general cylindrical shape and comes with some supporting legs (3) which are a part of the stove (1), which also includes a top handle (4) for its transport and carrying from place to place.

This stove (1) is a cylindrical hollow outer case, open at the top and closed at the bottom, this bottom containing a tray (5) to keep the combustion material (coal, wood, etc.). The inside of the stove is accesible through its open top or through the bottom side opening (6), through which the combustion material can be introduced.

The bottom or tray (5) has holes to help combustion, holes which together with those at the side (7) are also used to let out the smoke. This stove or cylindrical outer case is reinforced by annular rings (8). Its construction will be possible in any kind of light material (stainless steel, aluminium, brass, galvanized sheet steel, etc.).

The other key part of the unit is the pot (2) which has a more or less conventional shape, but with the special feature of a protruding circular horizontal plate (9) around its opening. This plate has two handles (10) so that a chain or something of this nature (11) is linked to one of them for the permanent attachment or linking of the corresponding top (12) of the pot (2), thus avoiding the possibility of this top (12) being mislaid.

Naturally, the pot (2) will be built of any suitable material, always of metal, such as those suggested, being designed to hold the food to be cooked or stewed and then, by placing the pot (2) in the stove (1), supported by the protruding horizontal plate (9) on the rim of the stove (1), the pot (2) and, therefore, the food, will be subjected to the fire or heat coming from the combustion material placed inside the stove itself (1), on its tray or bottom surface.

## Claims

1.- Combined stove and pot to cook outdoors designed to allow the cooking of stews with the most varied ingredients, anywhere outdoors, without the risk of causing a fire. It is essentially characterized by having two main parts, one of them made up of a cylindrical metal outer case which is the actual stove, and the other made up of a receptacle, also metal, which is the pot. The pot is designed to hold the food to be cooked, so that the pot is placed inside the stove over the fire of heat radiated by any suitable combustion material (wood, coal, etc.) placed on a bottom tray - -with holes which is the bottom of the stove. This stove is held up upon supporting legs; thus, the pot is designed to be suspended inside the stove, via the resting on the rim of the stove of a protruding horizontal plate which the - -upper rim of the pot has; this plate has two handles, one of which is chained to the corresponding top of the pot.

Fig. 1

Fig. 2

European Patent Office

# EUROPEAN SEARCH REPORT

Application Number

EP    90 50 0007

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-492661 (ROSA EUGENE-PIERRE)<br>* the whole document *<br>--- | 1 | A47J37/07 |
| A | US-A-4762114 (BLANKEMEYER WILLIAM J.)<br>* column 1, line 35 - column 3, line 14; figure 1 *<br>--- | 1 | |
| A | GB-A-2180926 (MICUTA & HAAS)<br>----- | | |
| | | | TECHNICAL FIELDS SEARCHED (Int. Cl.5)<br><br>A47J<br>F24B |

The present search report has been drawn up for all claims

| Place of search | Date of completion of the search | Examiner |
|---|---|---|
| THE HAGUE | 02 MAY 1990 | FUOCHI R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P0401)